# EUROPEAN PATENT SPECIFICATION

(11) **EP 1 559 759 B1**
(45) Date of publication and mention of the grant of the patent: **30.05.2007**
(21) Application number: 03790963.7
(22) Date of filing: 31.07.2003
(51) Int. Cl.: C09D 11/02, B41M 7/00

(54) **METHOD OF PRODUCING A DIGITAL PRINTING INK AND INK THUS OBTAINED**
VERFAHREN ZUR HERSTELLUNG EINER DIGITALDRUCKTINTE UND SO ERHALTENDE TINTE
PROCEDE DE FABRICATION D'UNE ENCRE D'IMPRESSION NUMERIQUE ET ENCRE AINSI OBTENUE

(30) Priority: 27.08.2002 ES 200201983
(43) Date of publication of application: 03.08.2005
(73) Proprietor: Chimigraf Iberica, S.L., 08191 Rubi (ES)
(72) Inventor: L PEZ MUNOZ, Antonio, 08700 IGUALADA (ES)
(74) Representative: Manresa Val, Manuel
(86) International application number: PCT/ES2003/000401
(87) International publication number: WO 2004/020539

(56) References cited:
- EP-A- 0 106 628
- GB-A- 2 211 791
- GB-A- 2 303 376

## Description

Method of producing a digital printing ink characterized by including the following steps: dispersing coloring agents in a mixture of oligomers and monomers with a maximum particle size of 1 micron; diluting same with a mixture of monofunctional and multifunctional acrylic monomers until a viscosity of between 10 and 30 centipoises is obtained; introducing a photoinitiator system which causes the polymerization of the oligomers and monomers from the first step, in the presence of ultraviolet radiation; and subjecting the resulting ink to a filtration process.

### BACKGROUND OF THE INVENTION

Different state-of-the-art procedures and sublimating inks are known for digital printing. Specifically, waterbased inks.

Other digital inks can be for laser printers. These inks start out with toner or powdered ink and through an electrostatic charge from the printer transfer the ink using a laser beam.

Also known are inkjet inks that use nozzles to direct the ink using previously digitized information from the computer.

Computer to Plate printing inks are also known, consisting of a previously created computer file, which will make the electronic stamping on the plates.

In fact, the vast majority of inks known to date follow the same scheme:

A sublimatable coloring agent or mixture of coloring agents to which a soluble resin is added to be used as a medium.

Then, an organic solvent is introduced (water-based or pure), or a mixture of a water-based organic solvent and a pure one.

Finally, a resin is used as a thickening agent or as adhesive for the ink.

Also, it can be noted that resins can be identical and that they can include additives like ethyl alcohol or butanol, among others.

This outline is followed by the 1973 Spanish patent No. 413.791 from CIBA-GEIGY AG, consisting of a method to prepare printing inks for printing by transference through sublimation, where the advantage is in allowing the combination of concentrated preparations rich in coloring agents.

Patent USA No. 6.383.274 describes an inkjet water-based printing ink in which the printing bleeding agent includes a fluorinated composition, specifically a perfluoroalkyl acid salt. This patent underlines that the advantages of these inks are: reduction of drying time and, specially, prevention of ink bleeding.

Patent USA No. 6.627.677 describes a water-based, flash-curable ink jet ink that is capable of adhering to plastic substrates, such as flexible polyvinyl chloride, the ink comprising: a) at least one water-dispersible or water-soluble acrylate polymerizable material; b) at least one polymerizable material that is capable of softening the substrate in part or in full and is resistant to hydrolysis; c) at least one colorant such as a pigment, a dye or both a pigment and a dye; and d) at least one UV photoinitiator.

Patent USA No. 6,593,390 describes a radiation curable ink jet ink having a viscosity not greater than 35 mPa.s at 30.degree. C. and comprising a colorant component, a diluent consisting essentially of reactive liquid material and, optionally, at least one photopolymerization catalyst and wherein the reactive liquid material is formed of both monofunctional and polyfunctional material and comprises 5 to 30% by weight of at least one oligomer.

Finally USA No. 6,433,038 (Tanabe et al.) discloses a photocurable ink composition for use in an ink jet recording method wherein an ink composition is brought into contact with a recording medium followed by a photocuring reaction to perform printing. The photocurable ink composition can offer good coating strength, chemical resistance, dispersion stability, and printing stability. This photocurable ink composition comprises at least a colorant, a urethane oligomer, a monomer having a tri- or higher functional reactive group, a photopolymerization initiator, and an aqueous solvent. After printing the photocurable ink composition, ultraviolet light is applied to cure the print. The colorant is preferably anatase titanium dioxide.

### BRIEF DESCRIPTION OF THE REQUESTED INVENTION

The present invention is an advancement in the field of ink production, particularly inks for digital printing.

Such inks, once printed on the media, are dried through radiation, which causes the polymerization of the ink, and results in an immediate fixation to the media as well as feeling dry to the touch.

Previously mentioned inks, including those known as state-of-the-art digital printing inks, have the inconvenience of "moving" when transferring the dispersing coloring agent to the fabric through pressure and heat, resulting in designs that are not perfect.

This ink completely changes the concept of previously mentioned inks because it has a sublimatable coloring agent or mixture of coloring agents but lacks any kind of resin used as a medium, or any organic solvent or resin that might serve as thickening agent, because its special composition makes this unnecessary.

All of this because the medium for the procedure is formed at the time of the polymerization of the monomers and oligomers.

At the same time, monomers and oligomers themselves act as solvents, thus forming the resin at the time of polymerization.

For all these reasons, the use of water or other solvents is not necessary in order to produce this ink.

### SPECIFIC PROCESS FOR THE REQUESTED PATENT

Thus, the specific process for the present invention requires that in order to produce an ink-jet digital printing ink, the following steps must be completed:

For the first step, proceed to the dispersion of coloring agents in a mixture of oligomers and monomers, in such a way that the maximum size of the particle would not be more than 1 micron.

Such dispersion of coloring agents is obtained by using a high energy ball mill, combined with the application of a constant temperature between 35°C and 80°C, milling until an average particle size between 0.1 and 0.8 microns is obtained, and combining all of the above with a mixture of monomers and dispersants, in order to avoid re-agglomeration of dispersing coloring agents.

This is subsequently diluted with a mixture of monofunctional and multifunctional acrylic monomers until a viscosity between 10 and 30 centipoises is achieved.

Thus, regarding this monofunctional acrylic monomer, the ideal ratio is the one found between 25% and 55% of total acrylic monomers. This specific process uses Isobornyl Acrylate.

Of the multifunctional acrylic monomers, between 44% and 75% of total acrylic monomers, those that are bifunctional or trifunctional must be differentiated.

Among bifunctional acrylic monomers, Hexandioldiacrylate and Tripropyleneglycoldiacrylate will be used for this specific process.

Among trifunctional acrylic monomers, Trimethylolpropanetriacrylate will be used.

Then, a photoinitiator system is introduced, which starts the polymerization of the oligomers and monomers from the first step, because of the liberation of radicals after being subject to a radiation source.

Later, once the ink formulation is finished, and the desired viscosity has been obtained, the resulting ink is subject to a filtration process in order to retain particles by means of successive filters ending with a 1 micron filter, retaining all those particles bigger than 1 micron.

This ink is particularly useful for printing on flexible media, such as paper, plastified elements, plastic films, etc.

Such flexible media, through drop-on-demand piezoelectric heads, also known in the industry as ink-jets, eject ink drops until the desired image or picture is formed.

Once the resulting ink has been printed on a media, a radiation source is applied on the ink, i.e. the light from an ultraviolet lamp or through electron bombing, which fracture the molecules of the photoinitiator system, turning them into free radicals that react, violently and quickly, to the oligomers and monomers, resulting in a polymer that sets the dispersing coloring agents on the printed media.

These printed media can be stored until they are needed for later use.

When it becomes necessary to place the printed media on a surface, i.e. fabric, apply the printed media to the fabric, specifically the back of the surface to be printed, and with a temperature starting at 150°C, apply pressure for at least 10 seconds.

Once the required time has lapsed, separation of the printed media from the surface of the fabric will result in the inking of the fabric by the dispersing coloring agent of the formula, placing the ink film over the printed media.

This is the result of taking advantage of the known properties of certain dispersing coloring agents capable of high temperature sublimation, which allows them to leave the ink film and ink the fabric.

At the same time, the inventor has been able to test that synthetic fiber fabric that has been printed with the above mentioned ink does not require any further treatment to assure resistance after being washed.

On the other hand, natural fiber fabric that has been printed with ink from this invention will require a pre-treatment to assure resistance.

This invention patent describes a new method of producing a digital printing ink and the ink thus obtained. The examples mentioned herein are not limited to this invention and will therefore have different applications and/or adaptations, all of them within the scope of the following claims.

## Claims

1. Method of producing a digital printing ink **characterized by** comprising the following steps:
- Proceed to dispersing disperse dye in a mixture of oligomers and monomers with a maximum particle size of 1 micron.
- dilute same with a mixture of monofunctional and multifunctional acrylic monomers until a viscosity of between 10 and 30 centipoises is obtained; Introduce a photoinitiator system, which causes the polymerization of the oligomers and monomers from the first step, in the presence of radiation; and
- subjecting the resulting ink to a filtering process, to obtain particles by means of at least one filter, finalizing with a 1 micron filter.
**characterized by** the production of free radicals that react with the oligomers and monomers when the resulting ink is printed on a media and the referred radiation source is applied to this ink, fracturing the molecules of the photoinitiator system, thus producing a polymer that sets the dispersing disperse dye on the media.

2. - Method according to claim 1 **characterized by** having Isobornyl Acrylate among the monofunctional acrylic monomers, with a ratio of 25% to 55% wt. of total acrylic monomers.

3. - Method according to claim 1 **characterized by** having bifunctional and trifunctional multifunctional acrylic monomers with a ratio of 44% to 75% wt. of total acrylic monomers.

4. - Method according to claim 3 **characterized by** having Hexandioldiacrylate among the bifunctional acrylic monomers.

5. - Method according to claim 3 **characterized by** having Tripropyleneglycoldiacrylate among the bifunctional acrylic monomers.

6. - Method according to claim 3 **characterized by** having Trimethylolpropanetriacrylate among the trifunctional acrylic monomers.

7. - Method according to claim 1 **characterized by** having the source of radiation be at least one source of ultraviolet light.

8. - Method according to claim 1 **characterized by** having the source of radiation be a bombardment of electrons.

9. - Digital printing ink according to the previously mentioned method that comprises dispersing disperse dye in an organic medium dispersed in a mixture of oligomers and monomers with a maximum particle size of 1 micron; diluting it with a mixture of monofunctional and multifunctional acrylic monomers until a viscosity of between 10 and 30 centipoises is obtained; with a photoinitiator system which causes the polymerization of the oligomers and monomers from the first step, subjecting the resulting ink to at least one filter, finalizing with a 1 micron filter **characterized by** having:
- Isobornyl Acrylate as the monofunctional acrylic monomer, with a ratio of 25% to 55%. wt. of total acrylic monomers
- bifunctional and trifunctional multifunctional acrylic monomers, with a ratio of 44% to 75% wt. of total acrylic monomers

10. - Ink according to claim 9 **characterized by** having Hexandioldiacrylate among the bifunctional acrylic monomers.

11. - Ink according to claim 9 **characterized by** having Tripropyleneglycoldiacrylate among the bifunctional acrylic monomers.

12. - Ink according to claim 9 **characterized by** having Trimethylolpropanetriacrylate among the trifunctional acrylic monomers.

## Patentansprüche

1. Verfahren zur Herstellung einer digitalen Druckfarbe, **dadurch gekennzeichnet, dass** es aus folgenden Schritten besteht:
Dispersion einer Dispersionsfarbe in einer Mischung aus Oligomeren und Monomeren mit einer maximalen Teilchengröße von 1 Mikron,
Verdünnung dieser Mischung mit einer Mischung aus monofunktionellen und multifunktionellen Acrylmonomeren bis zum Erreichen einer Viskosität zwischen 10 und 30 Centipoise; Zugabe eines Fotoinitatorsystems zwecks Polymerisation der Oligomeren und Monomeren aus Schritt 1 unter Strahlungseinwirkung; sowie
Filtration der gebildeten Druckfarbe, wobei Teilchen entstehen, die mindestens mit einem Filter filtriert wurden, wobei es sich bei dem letzten Filter um einen Filter mit 1 Mikron handelt,
**dadurch gekennzeichnet, dass** freie Radikale entstehen, die beim Bedrucken von Medien mit der erhaltenen Druckfarbe bei Einwirkung der genannten Strahlung mit den Oligomeren und Monomeren reagieren, **dadurch** die Moleküle des Fotoinitiatorsystems zerbrechen und hierdurch ein Polymer entsteht, das die Dispersionsfarbe auf den Medien aushärtet.

2. Verfahren nach Anspruch 1, **dadurch gekennzeichnet, dass** als monofunktionelle Acrylmonomere Isobornylacrylat in einem Verhältnis von 25 bis 55 Gew.-%, bezogen auf die Gesamtacrylmonomere, eingesetzt wird.

3. Verfahren nach Anspruch 1, **dadurch gekennzeichnet, dass** als monofunktionelle Acrylmonomere bifunktionelle und trifunktionelle in einem Verhältnis von 44 bis 75 Gew.-%, bezogen auf die Gesamtacrylmonomere, eingesetzt werden.

4. Verfahren nach Anspruch 3, **dadurch gekennzeichnet, dass** als bifunktionelle Acrylmonomere Hexandioldiacrylat eingesetzt wird.

5. Verfahren nach Anspruch 3, **dadurch gekennzeichnet, dass** als bifunktionelle Acrylmonomere Tripropylenglycoldiacrylat vorliegt.

6. Verfahren nach Anspruch 3, **dadurch gekennzeichnet, dass** als trifunktionelle Acrylmonomere Trimethylolpropantriacrylat eingesetzt werden.

7. Verfahren nach Anspruch 1, **dadurch gekennzeichnet, dass** als Strahlungsquelle mindestens eine Ultraviolettstrahlungsquelle eingesetzt wird.

8. Verfahren nach Anspruch 1, **dadurch gekennzeichnet, dass** als Strahlungsquelle Elektronenbeschuss eingesetzt wird.

9. Digitale Druckfarbe nach dem oben genannten Verfahren, das aus folgenden Schritten besteht:
Dispersion einer Dispersionsfarbe in einer Mischung aus Oligomeren und Monomeren mit einer maximalen Teilchengröße von 1 Mikron,
Verdünnung dieser Mischung mit einer Mischung aus monofunktionellen und multifunktionellen Acrylmonomeren bis zum Erreichen einer Viskosität zwischen 10 und 30 Centipoise; Zugabe eines Fotoinitatorsystems zwecks Polymerisation der Oligomeren und Monomeren aus Schritt 1 unter Strahlungseinwirkung; sowie
mehrfache Filtration der gebildeten Druckfarbe mit mindestens einem Filter, wobei es sich bei dem letzten Filter um einen Filter mit 1 Mikron handelt,
**dadurch gekennzeichnet, dass**
als monofunktionelle Acrylmonomere Isobornylacrylat in einem Verhältnis von 25 bis 55 Gew.-%, bezogen auf die Gesamtacrylmonomere, eingesetzt wird,
als monofunktionelle Acrylmonomere bifunktionelle und trifunktionelle in einem Verhältnis von 44 bis 75 Gew.-%, bezogen auf die Gesamtacrylmonomere, eingesetzt werden.

10. Farbe nach Anspruch 9, **dadurch gekennzeichnet, dass** als bifunktionelle Acrylmonomere Hexandioldiacrylat eingesetzt wird.

11. Farbe nach Anspruch 9, **dadurch gekennzeichnet, dass** als bifunktionelle Acrylmonomere Tripropylenglycoldiacrylat vorliegt.

12. Farbe nach Anspruch 9, **dadurch gekennzeichnet, dass** als trifunktionelle Acrylmonomere Trimethylolpropantriacrylat eingesetzt wird.

## Revendications

1. Procédé de production d'une encre d'impression numérique comprenant les étapes suivantes:
- Disperser le colorant de dispersion facile à disperser dans un mélange d'oligomères et de monomères avec une taille de particule d'un micron maximum.
- Diluer celui-ci dans un mélange de monomères acryliques monofonctionnels et multifonctionnels jusqu'à obtenir une viscosité comprise entre 10 et 30 centipoises; introduire un système photoamorceur qui provoque la polymérisation des oligomères et des monomères de la première étape, en présence de radiation; et
- Exposer l'encre résultat de l'opération à un processus de filtration pour obtenir des particules au moyen d'au moins un filtre, et terminer avec un filtre d'un micron,
**caractérisé en ce que** la production de radicaux libres qui réagissent avec les oligomères et les monomères lorsque l'encre résultat de l'opération est imprimée sur une surface et la source de radiation mentionnée est appliquée à cette encre, en cassant les molécules du système photoamorceur, ce qui produit un polymère qui répartir sur la surface le colorant facile à disperser.

2. Procédé selon la revendication 1 et **caractérisé en ce qu'**il y a un acrylate d'isobornyle parmi les monomères acryliques monofonctionnels, avec un taux de 25% à 55% en poids du total des monomères acryliques.

3. Procédé selon la revendication 1 et **caractérisé en ce qu'**il y a des monomères acryliques multifonctionnels, bifonctionnels et trifonctionnels, avec un taux de 44% de 75% en poids du total des monomères acryliques.

4. Procédé selon la revendication 3 et **caractérisé en ce qu'**il y a du diacrylate d'hexanediol parmi les monomères acryliques bifonctionnels.

5. Procédé selon la revendication 3 et **caractérisé en ce qu'**il y a du tripropylène glycol diacrylate parmi les monomères acryliques bifonctionnels.

6. Procédé selon la revendication 3 et **caractérisé en ce qu'**il y a du triméthylol propane triacrylate parmi les monomères acryliques trifonctionnels.

7. Procédé selon la revendication 1 et **caractérisé en ce que** la source de radiation est au moins une source de lumière ultraviolette.

8. Procédé selon la revendication 1 et **caractérisé en ce que** la source de radiation est un bombardement d'électrons.

9. Encre d'impression numérique selon le procédé mentionné au préalable et qui comprend un colorant de dispersion facile à disperser dans un milieu organique dispersé dans un mélange d'oligomères et de monomères avec une dimension de particule d'un micron maximum; dilution dans un mélange de monomères acryliques monofonctionnels et multifonctionnels jusqu'à obtenir une viscosité comprise entre 10 et 30 centipoises; avec un système photoamorceur qui provoque la polymérisation des oligomères et des monomères de la première étape, en exposant l'encre résultat de l'opération à au moins un filtre, et en terminant avec un filtre d'un micron et **caractérisé en ce qu'**il y a:
- De l'acrylate d'isobornyle comme monomère acrylique monofonctionnel, avec un taux de 25% à 55% en poids du total des monomères acryliques.
- Des monomères acryliques multifonctionnels, bifonctionnels et trifonctionnels, avec un taux de 44% à 75% en poids du total des monomères acryliques.

10. Encre selon la revendication 9 et **caractérisée en ce qu'**il y a du diacrylate d'hexanediol parmi les monomères acryliques bifonctionnels.

11. Encre selon la revendication 9 et **caractérisée en ce qu'**il y a du tripropylène glycol diacrylate parmi les monomères acryliques bifonctionnels.

12. Encre selon la revendication 9 et **caractérisée en ce qu'**il y a du triméthylol propane triacrylate parmi les monomères acryliques trifonctionnels.
